Europäisches Patentamt

European Patent Office

Office européen des brevets

(11) Publication number: **0 358 385**
**A2**

## (12) EUROPEAN PATENT APPLICATION

(21) Application number: 89308605.8

(22) Date of filing: 24.08.89

(51) Int. Cl.⁵: **C08J 3/09 , C08J 3/03 , C09J 7/04 , D06N 7/00 , E21B 43/25 , //(C08L33/02, 33:02)**

(30) Priority: 26.08.88 GB 8820331
05.10.88 GB 8823343

(43) Date of publication of application:
14.03.90 Bulletin 90/11

(84) Designated Contracting States:
DE ES FR GB IT NL

(71) Applicant: ALLIED COLLOIDS LIMITED
P.O. Box 38 Low Moor
Bradford West Yorkshire, BD12 0JZ(GB)

(72) Inventor: Farrar, David
190 Westfield Lane Idle
Bradfort West Yorkshire BD10 8UB(GB)
Inventor: Hawe, Malcolm
3 Broombank Birkby
Huddersfield West Yorkshire(GB)
Inventor: Clarke, John Bernard
10 Smithy Lane Wilsden
Bradford West Yorkshire BD15 OEG(GB)

(74) Representative: Lawrence, Peter Robin
Broughton et al
GILL JENNINGS & EVERY 53-64 Chancery
Lane
London WC2A 1HN(GB)

(54) Polymeric thickeners.

(57) A fluid composition that is a solution of an associative polymeric thickener in a solvent system comprising water miscible polar organic solvent can be thickened by diluting the composition with water. It can also be thickened by volatilising the solvent. A prepasted wallcovering can be formed by spreading a coating of the fluid composition, at a low viscosity, on the back of the wallcovering and then volatilising the solvent to form a coating that, when rewetted by water, provides a high viscosity and adhesive coating. Downhole aqueous fluids, such as fracturing fluids, can be viscosified by pumping the fluid composition downhole where it mixes with additional water and thus thickens it.

EP 0 358 385 A2

## Polymeric Thickeners

The thickening effect in an aqueous phase of a water soluble or water swellable polymeric thickener is generally approximately proportional to the concentration of that thickener in the aqueous phase. Thus, in general terms, dilution of a viscous solution of the polymer will result in the solution being less viscous.

In some instances viscosity of an aqueous solution of a thickener can be reduced by incorporating also a water miscible polar solvent, so that the solvent system of the aqueous phase then consists of a homogeneous mixture of water and this solvent. Again, viscosity is generally approximately proportional to concentration. Dilution with water of a solution of the polymer in a mixture of water and polar solvent will generally reduce the viscosity approximately in proportion to the dilution.

It is well known to thicken aqueous media by the use of polymers that are known as associative polymers, and which have to be present in a concentration sufficient to give association between adjacent polymer molecules. This concentration is generally referred to as being above the critical micelle concentration. A general description of polymers of this type, and of a particular forms of such polymers of this type, is in, for instance, EP 11806, 13836 and 216479 and in U.S. 4,138,381. The polymers are copolymers of an ethylenically unsaturated monomer having an associative group (i.e., a hydrophobe generally on a polyethoxy chain) with other ethylenically unsaturated monomer, such as (meth) acrylic acid, acrylamide or ethyl acrylate. The associative thickening effect appears to rely upon interaction between either hydrophobes of adjacent polymer molecules or, in many commercial uses, the hydrophobes of polymer molecules with other hydrophobes in the system that is to be thickened, for instance surfactant molecules or small dispersed particles.

Although polymers of this general type are known which can initially be made in water soluble form (for instance by reverse phase polymerisation of a monomer blend containing a water soluble associative monomer together with, for instance, sodium acrylate) most of the products that have been commercialised are made by oil-in-water emulsion polymerisation of a blend of an ethylenically unsaturated acid (in free acid form), a non-ionic monomer such as ethyl acrylate and which is substantially insoluble in water, and the associative monomer. The monomer blend is insoluble in water and so is polymerised by oil-in-water emulsion polymerisation to form a low viscosity emulsion of water-insoluble polymer particles. When this is neutralised, it becomes very viscous because of the solubilisation effect on the carboxylic monomer. The polymer can be linear or cross linked. Often deliberate steps (namely the addition of a chain transfer agent) are applied to depress the molecular weight, especially when the polymer is linear.

Usually the emulsion is added to the paint or other medium that is to be thickened while it is still in the acid form, and is then neutralised in situ. However in Resin Review Volume 33 No.4, pages 25 to 31, it has been proposed that one such emulsion sold under the trade name Acrysol TT935 can be preneutralised. In particular it is stated that a 2.5% solution of the neutralised emulsion will give a viscosity of 20,000cp and that this is too high. It is therefore proposed to thin the thickened system by introducing a water miscible cosolvent such as butyl carbitol (2-butoxyethanol) and the example shows a system of about 17% (dry weight) polymer, 70% water, about 8% butyl carbitol and about 2% ammonia.

Similarly, trade literature describing the formulation for use of a cross linked associative polymer emulsion, Acrysol TT615, recommends formulating the emulsion with alcohol, ammonium or caustic and water, with the recommended formula being about 67 parts dry weight polymer, 250 parts water, 150 parts alcohol, plus ammonia or caustic. The amount of alcohol based on the total solvent blend of alcohol plus water is about 37%. The polymer appears to be a cross linked polymer and it is stated that the viscosities that are obtained are 6,700cps when the alcohol is isopropanol, 19,000cps when the alcohol is 1-propoxy-2-propanol and 29,000cps when the alcohol is methoxy propoxy propanol.

Thus in these two instances the organic solvent is being used for its conventional purpose of merely thinning the aqueous solution and conventional thinking would indicate that the addition of more water would also result in thinning of the solution. It is thought that the polymers in these two compositions are formed from a blend of monomers of which about 10% monomer is associative monomer.

When the alcohol solutions of these polymers are added to the paint, association occurs between the polymer and surfactant and pigment in the paint, as a result of which the polymer appears to give useful thickening properties to the paints.

In U.S. 4,138,381 rather similar polymers are made by polymerisation in the presence of a glycol, which can be blended with some water.

There are many instances where it would be desirable to be able to provide a water soluble polymer in the form of a relatively low viscosity fluid and convert it, without any essential chemical change, to a much more highly viscous, or even a solid form. At present, conversion of a polymer from a low viscous to a high viscous form generally necessitates chemical reaction (e.g, cross linking) or evaporation of large amounts of solvent, generally an organic solvent. None of the descriptions that have been made so far of associative or other polymers have indicated how the desired change might be achieved.

There are various instances where it would be desirable to achieve dramatic changes in viscosity without effecting chemical changes. For instance it would be desirable to be able to pump a relatively fluid solution downhole but for the solution to become very viscous when it becomes diluted with water.

A particular problem exists in the manufacture of prepasted wallcoverings wherein the prepaste is applied as a fluid composition which is then dried on to the wallcovering. It is necessary for the final product to give a viscous coating when wetted with water but the application of the coating has to be achieved using a low viscosity composition, as otherwise the application is technically difficult. Thus it would be desirable to apply a high solids, low viscous, composition which, after drying, gives a coating that has high viscosity when wetted with water. Conventional solvation technology of course cannot achieve this and it is for this reason that the most successful liquid system at present used for making prepasted wallcoverings requires the polymer to be applied as an emulsion in non-aqueous liquid. However this involves the evaporation of large quantities of non-aqueous liquid, and this can be undesirable.

We have now made the remarkable discovery that the viscosity of a solution in a water-polar solvent mixture of a thickening associative polymer can be dramatically increased by diluting the composition with water. Thus we have made the remarkable discovery that a low viscosity solution of associative polymer in a homogeneous blend of polar solvent and water can be dramatically thickened, and even converted into a substantially solid gel, by adding more water.

Even if one accepts that the viscosity-reducing effect of the polar solvent might have been reduced by dilution with water, it would also have been expected that the additional amount of water would itself have reduced viscosity. It was therefore entirely unpredictable that it is possible to obtain a dramatic increase in viscosity merely by diluting the composition with water.

A composition according to the invention has a viscosity of below 30,000cps and is a solution of a thickening associative polymer that is soluble or swellable in water and that is a copolymer of ethylenically unsaturated monomer having an associative group with at least one other ethylenically unsaturated monomer, and the solution is in a solvent system comprising a water miscible polar organic solvent, and in this composition the viscosity of the composition is at a minimum when the solvent system includes a chosen amount of water and the viscosity increases at least three-fold upon dilution with water beyond the chosen amount.

Throughout this specification all viscosity measurements are by a Brookfield viscometer measured at 10rpm at room temperature (about 20°C) using the spindle that is most appropriate for the viscosity that is being recorded.

The composition is initially formulated with a sufficiently low viscosity that it is convenient for handling. Generally its viscosity therefore is below 20,000cps, often below 10,000cps and, when the composition is to be coated the initial viscosity is preferably below 5,000cps, generally below 2,000cps. This viscosity may be achieved either in a non-aqueous composition or, more usually, in a composition in which the solvent system contains both water and the polar organic solvent. Preferably the composition is initially provided with a ratio of polar organic solvent:water near the ratio at which the viscosity of the composition (at a given polymer content) is near the minimum obtainable by varying the ratio of organic solvent:water.

The composition must be such that, if it is at this ratio or if it is adjusted to this ratio, it is then possible to increase viscosity significantly by dilution with water. The final viscosity is usually above 30,000cps, generally above 50,000cps and with preferred compositions it is above 100,000cps.

The amount of dilution needed to obtain maximum viscosity can be, e.g., by a factor of 1.5 or more, e.g., 3-6 or up to a factor of 10 or more, e.g., up to 15 times. The maximum attainable viscosity is usually at least 5, and often at least 10 times, the starting viscosity.

The very surprising changes in viscosity with differences in ratio of organic solvent:water depend upon inter-relationship of a number of factors, including the proportion of associative groups in the polymer, the molecular weight of the polymer, the solvation power of the organic solvent, and the amount of organic solvent that is present, based on the weight of polymer.

If the amount of associative monomer in the polymer is too low then it may be difficult to find a solvent that will give the desired thickening effect. Normally the amount, by weight, is well above 5% and usually at least 10% by weight of monomers. For instance with conventional associative monomers useful results can be obtained with some solvent blends at, for instance, 15% associative monomer or typically 15 to 30% or more. Amounts of at least 20% by weight are preferred. The amounts can be higher than 30% by weight, for instance up to 50% or more, but the benefits of the invention can usually be obtained without going to these high values.

3

The polymer should have a reasonably high molecular weight as otherwise it is difficult to select a solvent, and solvent amount, that will give the desired effect. If the polymer has been made in the presence of a large amount of chain transfer agent then its molecular weight may be sufficiently low that it is difficult to select a solvent providing the increase in viscosity upon dilution with water. Generally the molecular weight is well above 100,000, often above 300,000 and frequently above 500,000. For many purposes it is above 1 million.

These values are particularly relevant to linear polymers but the invention is also of value with cross linked polymers, in which event the molecular weight may be less meaningful. Suitable amounts of cross linking agent are generally well in excess of 20ppm, typically above 50ppm, often in the range 100 to 1,000ppm, most preferably 100 to 500ppm.

If the polar solvent is present in too large an amount, or if it is too strong a solvent for the polymer, then dilution with water may not give the necessary increase in viscosity. Conversely, if the solvent has inadequate solvation power for the polymer then it may be impossible to achieve a starting solution having the desired low viscosity.

This inter-relationship between solvation power, amount or oganic solvent, and type of polymer exists because competing physical effects have to occur. On the one hand it is necessary to dilute the effect of the polar solvent (by the addition of water) but on the other hand the total concentration of polymer in the diluted solvent blend must be sufficiently high that the polymer can still give desired thickening. When the initial solvent blend contains too much polar solvent the very high dilution with water that is necessary to overcome the effect of the polar solvent is such that the resultant concentration of polymer is then too low to give the desired viscosity increase.

Typically the composition is one in which the ratio of polar solvent:water needed to achieve the major increase in viscosity is in the range 1:5 to 1:20, but the preferred ratio for any particular composition can easily be found by routine experimentation.

The optimum amount of polar solvent in the starting composition (having minimum viscosity) will be selected having regard to the features discussed above and is generally below 35%, usually below 30%, typically 5 to 30, generally 10 to 25, % based on the total solvent blend (i.e., water plus polar solvent). Often the composition is produced by polymerisation as an aqueous composition to which the polar solvent is then added in the desired amount, but if desired, the polymer can be made in the presence of the polar solvent, either non-aqueous or in the presence of part only of the water that is required to achieve the starting composition of minimum viscosity. Under these circumstances the initially produced composition will, of course, have its solvent system containing above 35% polar solvent, and possibly as much as 100% polar solvent (based on water plus polar solvent) but will normally then be diluted with water before subsequent use so as to provide a composition of low viscosity.

The amount of polymer in the initial composition of minimum viscosity is generally below 30% but usually above 2%, typically in the range 5 to 20 or 25%, most preferably 5 to 15%, based on the total composition.

Suitable solvents are better solvents than water for the polymer and may be selected from alcohols, ethers, esters and glycols. Particularly preferred are ethers and esters of alkylene glycols and of polyakylene glycols, preferably monobutyl ether of diethylene glycol but other mono or di alkylene ethers of diethylene glycol or of propylene glycol or of dipropylene glycol can be used. Other solvents that are preferred include propanols, for instance normal propanol or preferably isopropanol or a blend of normal and iso propanols (for instance industrial propanol solvent) and tertiary butanol, although it can sometimes be difficult to achieve an adequately low initial viscosity when using this. The amount of solvent depends upon the particular solvent and the polymer being used but is often in the range 0.5 to 5 parts, often about 0.8 to 3 parts, by weight solvent per part by weight polymer.

Although the compositions of the invention are characterised by the fact that it is possible to obtain a dramatic increase in viscosity merely by dilution with water, a useful increase in viscosity can be obtained, using such compositions, without any dilution.

Thus a process according to the invention comprises thickening a solution of an associative polymer in a solvent blend that comprises water and a polar solvent and that is a better solvent for the polymer than the water in the absence of the solvent by eliminating the viscosity reducing effect of the polar solvent. It seems that the essential mechanism is that the polar solvent interferes with the association that will otherwise occur between the associative groups in the polymer and so the desired dramatic increase in viscosity (far greater than would be predicted from normal concentration considerations) is obtainable whenever the composition is treated so as to eliminate the ability of the polar solvent to interfere with the associative thickening mechanism. As indicated, one way of preventing the solvent interfering with associative thickening is by dilution with additional water. Another way is by evaporating some or all of the solvent.

The elimination of the viscosity-reducing effect of the polar solvent is preferably effected in an environment where there are substantially no other moieties with which the associative groups could associate to give thickening. Thus the elimination of the viscosity-reducing effect of the polar solvent is preferably conducted in an environment that is substantially free of surfactant or dispersed pigment or other materials of the type with which it is known that the associative monomer groups can associate to give thickening. Thus, although the compositions of the invention can be used as a convenient way of, for instance, incorporating the polymer into an aqueous emulsion paint, preferably the compositions are used in environments that are free of surfactants or pigments.

A particularly preferred aspect of the invention comprises coating a substrate with an aqueous solution of an associative polymer that is present in an amount to give substantial viscosity but wherein the viscosity of the solution has been reduced to below 5,000cps, preferably below 2,000cps, by the inclusion of water-miscible cosolvent, and evaporating the cosolvent so as to obtain increased potential viscosity.

In a preferred aspect of the invention, a water wettable adhesive layer is formed on a substrate by a process comprising applying to the substrate a coating of a solution having a viscosity of below 5,000cps in a solvent system of an adhesive polymer and drying the coating, and in this process the adhesive polymer is a polymer that is soluble or swellable in water and is a copolymer of ethylenically unsaturated monomer having an associative group with other ethylenically unsaturated monomer, and the solvent system comprises a blend of water and a minor amount of water miscible polar organic solvent that is a better solvent than water for the polymer and that is volatile during the drying and that prevents thickening to association within the composition containing the solvent system. The composition is preferably one such that its viscosity is above 25,000cps, often at least 50,000cps and preferably at least 100,000cps when the solvent evaporates.

In the invention, a relatively high solids composition can be coated at low solution viscosity, due to the effect of the polar solvent, but when the resultant dried coating is rewetted with water it will have a very high viscosity, and thus will serve as a very effective adhesive, because the solvent will have volatilised.

Preferably the cosolvent and the water are both evaporated to provide a substantially dry coating on the substrate. Upon rewetting that coating with water a very viscous coating is obtained.

The invention is of particular value to prepasted wallcoverings since an aqueous solution of associative polymer containing a small amount of the cosolvent can be spread on the back of the wallcovering, the water and cosolvent can be evaporated and the resultant coating can then be used as a conventional aqueous prepaste that gives good adhesion and good rheology upon contact with water in the conventional manner. This method has the advantage over prepastes based on reverse phase compositions in that the amount of organic liquid that has to be evaporated is very low.

Another preferred way of eliminating the viscosity reducing effect comprises dilution, generally with water alone (optionally in the presence of eletrolyte) but alternatively some other solvent or solvent blend can be used provided it is a worse solvent for the polymer than the solvent in the starting composition.

Thus a composition containing polar solvent can be diluted with a sufficient amount of water that the concentration of cosolvent becomes inadequate to effect reduction in viscosity, whereupon the diluted aqueous composition will be thickened by the associative polymer. Although best thickening effects occur when the concentration of polymer is above the critical micelle concentration, useful thickening can be obtained at lower concentrations, especially in the presence of surfactant.

This aspect of the invention can be utilised by adding the starting composition to aqueous compositions containing pigments and/or surfactants and/or latex particles, for instance a paint base, a mill base or a carpet backing latex, but the invention is of particular value when the dilution water is an aqueous medium that is substantially free of useful suspended solids. In particular the invention is of value as an aqueous thickener, for instance a downhole aqueous liquid, such as a fracturing fluid or an enhanced oil recovery pusher liquid.

Accordingly, another preferred aspect of the invention involves thickening a downhole aqueous fluid (preferably a fracturing fluid) by adding to the fluid a solution having a viscosity below 30,000cps in a solvent system of a thickening polymer that is soluble or swellable in water and is a copolymer of ethylenically unsaturated monomer having an associative group with other ethylenically unsaturated monomer, and the solvent system comprises a water miscible polar organic solvent that is a better solvent than water for the polymer and which prevents associative thickening occurring at one water content but permits associative thickening to occur at a higher water content, whereby viscosity of the solution can increase at least three-fold upon dilution with water.

The downhole fluid is preferably free of surfactant and/or colloidal pigment particles such as bentonite or materials with which hydrophobic association may occur, but may include coarse particles such as sand.

Thus the relatively fluid starting composition of the invention can be pumped downhole and, when it strikes the water reservoir, it will thicken to give the desired viscosity effect. The aqueous medium that it strikes can be an aqueous electrolyte, such as sea water.

The polymers will be selected so that they have the desired use properties, for instance as adhesives or as thickeners. Associative polymers for use as adhesives are described in EP 214760. Associative polymers suitable for use as thickeners are described in, for instance, EP 11806, EP 13836 and EP 216479. Broadly, the polymers are water soluble or water swellable polymers formed from

(a) 3 to 100%, preferably 15 to 50%, by weight of an ethylenically unsaturated monomer that has a pendant group $B_nR$ where B is ethyleneoxy and n is zero or a positive integer and R is a hydrophobic group of at least 8 carbon atoms

(b) 0 to 97% other ethylenically unsaturated monomer

(c) 0 to 1% cross linking agent.

n is generally at least 2, preferably at least 5 and most preferably 10 to 100. R is preferably hydrocarbyl of 8 to 30 carbon atoms, most preferably 10 to 24 carbon atoms, generally selected from alkyl, aralkyl, aryl, alkaryl and cycloalkyl. The associative monomer can be any of the associative monomers described in EP 214760 and thus it can be, for instance, an acrylic ester or acrylamide group but preferably it is a (meth) allyl ether group as described in EP 216479.

The other ethylenically unsaturated monomer or monomers can be selected from ionic and non-ionic monomers such as any of those described in EP 216479. The corresponding U.S. application is SN 099,629 filed 22nd September 1987 and the entire disclosure of this is herein incorporated by reference.

The polymer may be a copolymer of associative monomer and water soluble monomer or monomers, such as sodium acrylate in which event it is generally preferred for n to be zero or a small integer and/or for R to be highly hydrophobic, so as to decrease the solubility of the polymer.

Generally however the polymer is a copolymer of an associative monomer, a relatively soluble ethylenically unsaturated caboxylic monomer (e.g., acrylic acid or methacrylic acid) together with the associative monomer and a relatively insoluble monomer. For instance monomer blends such as those described in EP 13836 may be used.

Preferably the polymer is one that is made by water-in-oil emulsion polymerisation (for instance as described in EP 11806, EP 13836 or EP 216479). The resultant emulsion of acidic polymer in water is then blended with further water (if necessary) and the chosen polar solvent in the chosen amount and alkali is added during or after this blending so as to form the desired solution.

Instead of making the polymer by oil-in-water polymerisation, similar polymers can be made by polymerisation in organic solvent or in aqueous organic solvent mixtures. Also, polymers that are water soluble at the polymerisation pH can be made by aqueous solution, gel or reverse phase polymerisation in conventional manner.

The following are examples.

Example 1

A low viscosity emulsion is formed of a copolymer of methacrylic acid, ethyl acrylate and the allyl ether of a 20 mole ethoxylate of strearyl alcohol, broadly as described in example 1 of EP 216479. 30g of this emulsion are blended with 10g of butyl dioxitol (i.e, monobutyl ether of diethylene glycol) and the pH of the product is then raised to between 7 and 8 by the addition of sodium hydroxide. In the absence of butyl dioxitol the solution would be extremely thick, but in fact only had a Brookfield viscosity of 120 cP.

The solution is coated on to the back of wallpaper to give a dry coating weight of 6g per square metre, and the continuous phase is evaporated from the coating.

On rewetting the dry coating with water, a highly viscous adhesive film is provided that gives good adhesion on to an emulsion-painted wall.

Example 2

A solution polymer is formed of 80 parts sodium polyacrylate and 20 parts of an acrylic ester with a 20 mole ethoxylate of stearyl alcohol by polymerisation in aqueous solution. The polymer is blended with butyl dioxitol to give a low viscosity solution that can be coated and dried to form a coating that, upon rewetting with water, gives good adhesion as a wallcovering adhesive.

Example 3

A copolymer was formed by oil-in-water emulsion polymerisation from 40% by weight ethyl acrylate, 40% by weight methacrylic acid and 20% by weight stearyl-10-ethoxylate allyl ether with 250ppm diallyl phthalate as cross linking agent, in known manner to form polymer A. The emulsion contained 30% water and was then diluted with water containing sodium hydroxide and organic solvent to give various compositions.

In a similar manner, polymer B was made from the same monomer mixture but in the absence of the diallyl phthalate and so was a high molecular weight linear polymer. It also was diluted with water containing sodium hydroxide and organic solvent to give various compositions.

In a similar manenr polymer C was made in the same way as polymer B except that the monomers were 50% ethyl acrylate, 40% methacrylic acid and 10% stearyl ethoxylate allyl ether.

Each of the compositions was formulated with solvent systems containing 30, 20 or 10% by weight organic solvent based on total solvent system and then each of these was diluted with water to give polymer concentrations ranging between 10% and 2%. The proportions of the compositions are shown in Table 1.

Table 1

| Solvent | Polymer | Solvent | Water |
|---------|---------|---------|-------|
| 30      | 10      | 27      | 63    |
|         | 8       | 22      | 70    |
|         | 6       | 16      | 78    |
|         | 4       | 11      | 85    |
|         | 2       | 5       | 93    |
| 20      | 10      | 18      | 72    |
|         | 8       | 14      | 78    |
|         | 6       | 11      | 83    |
|         | 4       | 7       | 89    |
| 10      | 10      | 9       | 81    |
|         | 8       | 7       | 85    |

The viscosity of the compositions was recorded but when it was above 100,000cps it was noted as a "gel". The results are shown in Table 2.

Table 2

| Polymer | Solvent | Viscosity at Polymer Concentration | | | | |
|---|---|---|---|---|---|---|
| | | 10% | 8% | 6% | 4% | 2% |
| A | 30 Butyl Dioxitol | 3500 | 2500 | 2000 | 4250 | gel |
| | 20 do. | 4350 | 4350 | 6800 | gel | |
| | 10 do. | gel | | | | |
| | 30 Isopropanol | 2700 | 4500 | 44000 | gel | |
| | 20 do. | 17800 | 51000 | gel | | |
| | 10 do. | gel | | | | |
| | 30 t-butanol | 2600 | 2400 | 3250 | gel | |
| | 20 do. | gel | | | | |
| | 30 methanol | gel | | | | |
| | 30 methylacetate | 36000 | gel | | | |
| | 30 propylene glycol | gel | | | | |
| B | 30 Butyl Dioxitol | 4550 | 1500 | 1000 | 800 | 58500 |
| | 20 do. | 3500 | 1800 | 2250 | 43000 | gel |
| | 10 do. | 13500 | gel | | | |
| | 30 Isopropanol | 2200 | 1800 | 21000 | gel | |
| | 20 do. | 21000 | gel | | | |
| | 30 t-butanol | 4900 | 1800 | 1500 | gel | |
| C | 30 Butyl Dioxitol | 15000 | 5000 | 2750 | 2500 | 26000 |
| | 20 do. | 10000 | 4500 | 4000 | 33000 | 80000 |
| | 10 do. | 15500 | 68000 | gel | | |
| | 30 Isopropanol | 7300 | 5000 | 18000 | 69000 | gel |
| | 20 do. | 22500 | gel | | | |
| | 30 t-butanol | 16750 | 6000 | 13500 | gel | |

These results clearly demonstrate the overall trend that increasing dilution of the polymer initially results in a decrease in the viscosity (as would be expected) but that further dilution then gives a large increase in viscosity (which is totally unexpected).

Comparison of the results for polymers B and C shows that there is much less difference in viscosity, according to concentration, in the polymer C solutions than in the polymer B solutions. Thus the initial viscosity tends to be higher at similar concentration and the final viscosity, at maximum recorded dilution, tends to be lower. This is because the reduced amount of associative monomer (10% in polymer C compared to 20% in polymer B) means that its viscosity profile is closer to the conventional profile of a conventional polymer and the unique characteristics of the associative polymer makes a lesser contribution.

Example 4

The formulation of Acrysol TT835 published in Resin Review Volume 33 No.4 page 30 consists of 17.5% polymer solids, 4.8% of 28% ammonia, 8% butoxy ethanol and 70% water. This composition has a viscosity of 4960. It drops to 1800 at 14% polymer concentration, to 400 at 10% polymer concentration, to 68 at 7% polymer concentration and to 20 at 3.5% polymer concentration. It seems that the amount of associative monomer (believed to be 10%) is too low and the solvent is incapable of giving the desired effect. Resin Review quotes the viscosity of a 2.5% solution in the absence of solvent as being 20,000cp and it is significant that the inclusion of the solvent reduces this, in conventional manner to a very much lower value.

Claims

1. A composition that has a viscosity of below 30,000cps and that is a solution of a thickening polymer that is soluble or swellable in water and that is a copolymer of ethylenically unsaturated monomer having an associative group with at least one other ethylenically unsaturated monomer in a solvent system comprising a water miscible polar organic solvent, characterised in that the viscosity of the composition is at a minimum when the solvent system includes a chosen amount of water and the viscosity increases at least three-fold upon further dilution with water.

2. A composition according to claim 1 in which the monomers from which the polymer is formed include at least 15% by weight associative monomer.

3. A composition according to claim 1 or claim 2 in which the polymer is a neutralised copolymer made by oil-in-water emulsion polymerisation of a water insoluble blend of associative monomer with acidic monomer and water insoluble monomer.

4. A composition according to any preceding claim having a viscosity below 5,000cps.

5. A composition according to any preceding claim in which the solvent system includes water and in which the said chosen amount of water, at which the viscosity is a minimum, is 5 to 20 times the amount of polar solvent and the amount of polar solvent is 0.8 to 3 times the weight of polymer.

6. A composition according to any preceding claim in which the viscosity increases at least ten-fold upon the said further dilution with water.

7. A composition according to any preceding claim in which the said polar solvent is selected from ethers of alkylene glycols, ethers of polyalkylene glycols, esters of alkylene glycols, esters of polyalkylene glycols, propanols and t-butanol.

8. A composition according to claim 1 in which the said solvent is selected from monobutyl ether of diethylene glycol and N and/or isopropanol.

9. A process comprising providing a composition according to any preceding claim and viscosifying the composition by diluting the composition with water or by evaporating the polar solvent.

10. A process according to claim 9 in which the solution is spread on a substrate and the solvent system is evaporated.

11. A process for forming a water wettable adhesive layer on a wallcovering comprising applying to the wallcovering substrate a coating of a solution having a viscosity of below 5,000cps in a solvent system of an adhesive polymer and drying the coating, characterised in that the adhesive polymer is a polymer that is soluble or swellable in water and is a copolymer of ethylenically unsaturated monomer having an associative group with other ethylenically unsaturated monomer, the solvent system comprises a blend of water and a minor amount of water miscible polar organic solvent that is a better solvent than water for the polymer and that is volatilised during the drying.

12. A process of thickening a downhole aqueous fluid comprising adding to the fluid a solution having a viscosity below 30,000cps in a solvent system of a thickening polymer, characterised in that the polymer is a polymer that is soluble or swellable in water and is a copolymer of ethylenically unsaturated monomer having an associative group with other unsaturated monomer, the solvent system comprises a water miscible polar organic solvent that is a better solvent than water for the polymer and which prevents associative thickening occurring at one water content but permits associative thickening occuring at a higher water content, whereby viscosity of the solution can increase at least three-fold upon dilution with water.

13. A process according to claim 11 or claim 12 in which the solution, in the absence of the solvent, would have a viscosity above 50,000cps.

14. A process according to any of claims 11 to 13 in which the monomers from which the polymer is formed include at least 15% by weight associative monomer.

15. A process according to any of claims 11 to 14 in which the solvent is selected from ethers of alkylene glycols, ethers of polyalkylene glycols, esters of alkylene glycols, esters of polyalkylene glycols, propanols and t-butanol.

16. A process according to any of claims 11 to 16 in which the solvent is selected from monobutyl ether of diethylene glycol and N and/or isopropanol.

17. A process according to any of claims 11 to 16 in which the polymer is a neutralised copolymer made by oil-in-water emulsion polymerisation of a water insoluble blend of associative monomer with acidic monomer and water insoluble monomer.

18. A process according to any of claims 11 to 17 in which the amount of water in the solution is 5 to 20 times the amount of polar solvent and the amount of polar solvent is 0.8 to 3 times the amount of polymer.